# FASCICULE DE BREVET EUROPEEN

(11) **EP 3 464 855 B1**
(45) Date de publication et mention de la délivrance du brevet: **17.02.2021**
(21) Numéro de dépôt: 17730868.1
(22) Date de dépôt: 23.05.2017
(51) Int. Cl.: F02C 7/36, F02C 7/32, F02C 3/107, F02C 3/113, F16H 3/72

(54) **TURBOMACHINE D'AÉRONEF AVEC RÉDUCTEUR EPICYCLOIDAL À RAPPORT DE RÉDUCTION VARIABLE**
FLUGZEUGTURBINENTRIEBWERK MIT EPIZYKLISCHEM UNTERSETZUNGSGETRIEBE MIT VARIABLEM ÜBERSETZUNGSVERHÄLTNIS
AIRCRAFT TURBINE ENGINE WITH EPICYCLIC REDUCTION GEAR HAVING A VARIABLE REDUCTION RATIO

(30) Priorité: 24.05.2016 FR 1654644
(43) Date de publication de la demande: 10.04.2019
(73) Titulaire: SAFRAN AIRCRAFT ENGINES, 75015 Paris (FR)
(72) Inventeur: FULLERINGER, Benjamin, 77550 Moissy-Crayamel (FR); CAZAUX, Yannick, 77550 Moissy-Crayamel (FR); LECOUVREUR, Damien, 77550 Moissy-Crayamel (FR)
(74) Mandataire: Gevers & Orès
(86) Numéro de dépôt international: PCT/FR2017/051266
(87) Numéro de publication internationale: WO 2017/203155

(56) Documents cités:
- WO-A2-2015/006153
- US-A- 5 997 426
- US-A1- 2005 014 600
- US-A1- 2014 290 265

## Description

### DOMAINE TECHNIQUE

La présente invention concerne une turbomachine d'aéronef à réducteur épicycloïdal permettant la réalisation d'un rapport de réduction continument variable.

### ETAT DE L'ART

Une turbomachine comprend un générateur de gaz comportant au moins un étage compresseur, une chambre de combustion, et au moins un étage de turbine. L'air est envoyé sous pression dans la chambre de combustion grâce au(x) compresseur(s). Mélangé à un carburant, l'air s'enflamme et entraîne la/les turbine(s). De la puissance est prélevée sur la/les turbine(s) pour entraîner mécaniquement en retour le/les compresseur(s).

En fonction de l'application visée, une turbomachine peut servir par exemple à :
- propulser un aéronef en utilisant les gaz chauds en sortie de turbine (turboréacteur), ou
- propulser un aéronef en prélevant de la puissance mécanique pour entraîner une soufflante (turbofan ou turboréacteur) ou une hélice (turbopropulseur) ou un rotor (turbomoteur ou APU - acronyme d'Auxiliary Power Unit). Il existe en général deux types de prélèvement :
   ∘ le prélèvement directement sur un corps du générateur de gaz (dans le cas où le générateur de gaz est du type à turbine liée)
   ∘ le prélèvement sur un étage de turbine (générateur de gaz du type à turbine libre).

L'ensemble formé par un rotor de compresseur, un rotor de turbine et un arbre reliant ces rotors, est appelé corps (tournant).

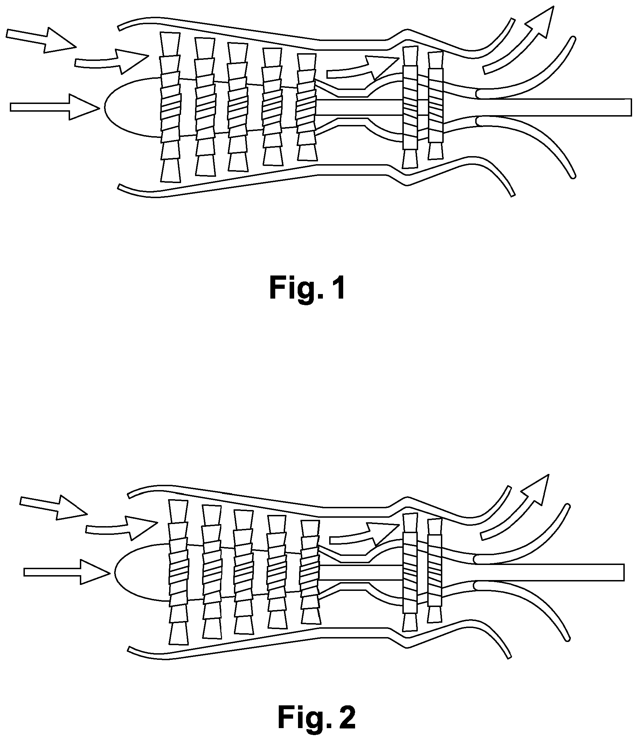

Dans certaines applications, telles que pour les hélicoptères, les turbomachines peuvent être à monocorps (figures 1 et 2). Le monocorps peut être associé à une turbine liée (figure 1) ou à une turbine libre (figure 2), c'est-à-dire à une turbine reliée ou non au corps du générateur de gaz.

Lorsque les puissances demandées deviennent importantes, le générateur de gaz nécessite un deuxième corps voire dans certains cas un troisième corps.

Dans l'application précitée des turbomoteurs d'hélicoptère à turbine liée, la puissance mécanique est prélevée directement sur le générateur de gaz. Le rotor de l'hélicoptère devant tourner à une vitesse quasi-constante pour toutes les phases de vol, le générateur de gaz tourne à iso-vitesse. Ainsi, on peut observer les avantages et inconvénients suivants :
- le fonctionnement du générateur de gaz est limité à une iso-vitesse en turbine liée, vitesse fixée par la vitesse cible du rotor et le rapport de réduction constant de la chaîne de transmission,
- la réactivité du moteur aux transitoires est bonne, puisque le générateur de gaz tourne déjà à la vitesse souhaitée (élevée), le taux de compression du compresseur étant disponible immédiatement,
- à pleine puissance, le moteur se rapproche de la ligne de pompage tout en offrant un bon rendement compresseur,
- à faible puissance, le générateur de gaz tourne rapidement, résultant en un rendement médiocre sur les charges partielles.
- une architecture moteur simplifiée,
- un besoin de recourir à un embrayage pour ne pas entraîner le rotor lors du démarrage moteur,
- une protection en survitesse électronique est suffisante compte tenu de l'inertie du générateur de gaz (absence de blindage).

Dans les architectures à turbine libre, la vitesse de rotation du générateur de gaz est variable et indépendante de la vitesse de rotation du rotor. La turbine libre est entraînée par les gaz en sortie de la turbine. La vitesse du générateur de gaz augmente en fonction de la puissance à fournir à la turbine libre. Dans cette solution, le compresseur est entre autre optimisé pour travailler en « parallèle » de la ligne de pompage, garantissant un rendement compresseur satisfaisant. Ainsi, on peut observer les avantages et inconvénients suivants :
- le fonctionnement du générateur de gaz est limité à une ligne de fonctionnement en mode turbine libre, la vitesse de la turbine libre étant fixée par la vitesse cible du rotor et le rapport de réduction constant de la chaîne de transmission,
- un rendement moteur satisfaisant dans tout le domaine de vol,
- une marge au pompage quasi permanente rendant le pilotage plus aisé,
- une architecture moteur complexifiée (turbine libre et ses paliers sur amortisseur à compression de film d'huile, arbres surcritiques traversant conditionnant le diamètre des disques),
- un système complexe de protection de survitesse (blindage), et
- une réactivité limitée car l'amplitude de vitesse du générateur de gaz est importante.

Il est également connu d'entraîner la soufflante d'une turbomachine par l'intermédiaire d'un réducteur épicycloïdal relié au corps basse-pression, comme cela est décrit dans le document FR-A1 -2 817 912.

Ainsi, la turbine BP peut d'une part tourner plus vite, réduisant le nombre d'étages nécessaires, et la soufflante peut quant à elle être augmentée en diamètre car tournant lentement. Cette solution simplifie l'architecture du générateur de gaz mais rajoute un composant : le réducteur. Le rapport de réduction est constant et permet d'optimiser la soufflante et la turbine HP différemment, en permettant de tourner à des vitesses différentes. Cette optimisation peut être faite sur un point de fonctionnement précis, mais ne s'adapte pas aux différentes phases de vol de l'aéronef.

Le choix du rapport de réduction du train épicycloïdal cité ci-avant permet une optimisation, mais ne permet pas au générateur de gaz de s'adapter librement aux variations de prélèvement qui lui sont demandées.

Afin de contourner ce problème, il est proposé dans le document US-B-8,181,442 une transmission à variation continue (ou CVT en anglais) toroïdale, permettant de choisir via la position angulaire du satellite, le rapport de réduction de la CVT toroïdale. Cette technologie a ainsi permis une simplification du générateur de gaz par l'adoption d'une architecture type « turbine liée ». Cette transmission toroïdale a l'inconvénient de compter sur le seul frottement pour transmettre le mouvement. De faibles couples sont ainsi transmissibles, ou de très fortes pré-charges sont nécessaires.

Pour une application hélicoptère, cette solution a les avantages suivants :
- permettre une simplification de l'architecture moteur (gain en coût et poids) si elle est associée à une turbine liée, en supprimant l'arbre sur-critique traversant, en réduisant le diamètre des disques, et en supprimant le blindage de la turbine libre, et
- permettre une exploration de l'ensemble du domaine dans le champ compresseur et une stratégie d'optimisation des performances moteur.

Elle présente toutefois les inconvénients suivants : elle ne permet pas de débrayer le rotor, imposant le recours à un embrayage, et elle ne permet pas de transmettre de forts couples, imposant une transmission supplémentaire en aval de la CVT toroïdale.

Enfin, on connaît également par le document FR-A1-2 405 367, une turbomachine dont le réducteur a sa couronne qui est configurée pour être sélectivement solidarisée à un stator de la turbomachine et désolidarisée de ce stator.

Un mode de réalisation du document WO-2015/006153-A2 et le document US-2014/290265-A1 décrivent et représentent chacun une turbomachine dont le réducteur a sa couronne qui est configurée pour être entrainée en rotation pour faire varier le rapport de réduction du réducteur. Toutefois, les moyens d'entraînement ne peuvent être bloqués de manière fiable car ils ne peuvent être solidarisés au stator de la turbomachine.

D'autres modes de réalisation du document WO-2015/006153-A2 décrivent et représentent une turbomachine dont le réducteur a son porte-satellites qui est configurée pour être entrainée en rotation pour faire varier le rapport de réduction du réducteur et qui peut être sélectivement rendu solidaire d'un carter de la turbomachine. Toutefois, le choix d'un accouplement du porte-satellites du réducteur à des moyens d'entraînement ne permet pas d'obtenir une gamme de rapport de réduction adéquate.

La présente invention propose un perfectionnement aux technologies actuelles décrites ci-dessus.

### EXPOSE DE L'INVENTION

L'invention propose à cet effet une turbomachine d'aéronef selon la revendication 1, et des procédés de commande d'une turbomachine selon les revendications 8 et 9. La turbomachine comporte un unique corps tournant comprenant un rotor de compresseur et un rotor de turbine reliés entre eux par un arbre de rotor, la turbomachine étant configurée pour entraîner un organe par ledit arbre par l'intermédiaire d'un réducteur épicycloïdal, ledit réducteur comportant au moins un premier élément solidaire en rotation dudit arbre, au moins un second élément configuré pour être solidaire en rotation dudit organe, et au moins un troisième élément qui est configuré pour être sélectivement solidarisé à un stator de la turbomachine et désolidarisé de ce stator, ladite turbomachine comprenant des moyens d'entraînement en rotation dudit troisième élément qui sont configurés pour entraîner ledit troisième élément à une vitesse pilotée lorsqu'il est désolidarisé dudit stator, ladite vitesse du troisième élément étant piloté de manière à maîtriser la vitesse dudit second élément selon un rapport de réduction adapté pour optimiser les performances de la turbomachine à plusieurs points de fonctionnement de la turbomachine, caractérisée en ce que ledit troisième élément est relié audit stator par des moyens de freinage et en ce que lesdits moyens d'entraînement comprennent des moyens de liaison mécanique audit troisième élément et des moyens de prélèvement mécanique de puissance sur ladite turbomachine ou sur une source extérieure à la turbomachine, les moyens d'entraînement étant configurés pour que la puissance prélevée par les moyens de prélèvement soient transmises par les moyens de liaison audit troisième élément en vue de son entraînement en rotation ; la mise en place d'une dérivation en cas de prélèvement sur la turbomachine peut permettre d'éviter de faire appel à une source extérieure d'énergie.

Le réducteur épicycloïdal est ainsi piloté, c'est-à-dire que la vitesse du troisième élément est pilotée de manière à maîtriser la vitesse de sortie du réducteur, c'est-à-dire la vitesse du second élément et de l'organe, selon une gamme de vitesse adéquate. Au contraire de la technique antérieure où le rapport de réduction n'est pas piloté, son rapport de réduction peut ici être adapté pour optimiser les performances de la turbomachine à plusieurs points de fonctionnement et/ou modifier la consigne de vitesse en sortie.

La turbomachine selon l'invention peut comprendre une ou plusieurs des caractéristiques suivantes, prises isolément les unes des autres ou en combinaison les unes avec les autres :
- ledit troisième élément est une couronne externe du réducteur,
- pour le cas d'un prélèvement sur la turbomachine, lesdits moyens de prélèvement mécanique sont configurés pour prélever une puissance sur ledit corps tournant ou sur ledit organe. Dans le cas où le prélèvement a lieu sur le corps tournant, ce prélèvement a lieu en amont du réducteur et, dans le cas où il a lieu sur l'organe, il a lieu en aval du réducteur,
- lesdits moyens de prélèvement mécanique sont reliés à un desdits éléments dudit réducteur,
- lesdits moyens de prélèvement sont réversibles, c'est-à-dire qu'ils sont aptes à fonctionner comme générateur ou moteur,
- lesdits moyens de liaison mécanique sont reliés auxdits moyens de prélèvement mécanique par un circuit électronique, électrique ou hydraulique, et
- la turbomachine est un turbomoteur d'hélicoptère, ledit organe étant un rotor de l'hélicoptère, ou un turbopropulseur ou turbomoteur d'avion, ledit organe étant une hélice ou une soufflante, ou un APU, ledit organe étant un équipement.

L'invention concerne aussi un procédé de commande d'une turbomachine du type précédemment décrit, caractérisé en ce qu'il comporte au moins :
- une étape de débrayage de l'arbre de rotor au cours de laquelle le troisième élément est laissé libre de tourner; et/ou
- une étape de fonctionnement en réducteur lié, au cours de laquelle le troisième élément est bloqué par les moyens de freinage.

Selon une autre caractéristique de ce procédé plus spécifiquement associé à une turbomachine comportant des moyens de prélèvement mécanique et des moyens d'entraînement en rotation du troisième élément constitués de moteurs-générateurs reliés par un circuit électrique, ce procédé comporte :
- une étape de démarrage au cours de laquelle la turbomachine est démarrée par au moins un des moteurs générateurs formant les moyens de prélèvement mécanique et des moyens d'entraînement en rotation du troisième élément, et/ou
- une étape d'assistance de la turbomachine dans ses régimes transitoires par au moins un des moteurs générateurs formant les moyens de prélèvement mécanique et des moyens d'entraînement en rotation du troisième élément, et/ou
- une étape de fourniture de puissance APU au cours de laquelle le second élément n'est pas entrainé en rotation et/ou est bloqué et dans laquelle au moins un des moteurs-générateurs formant les moyens de prélèvement mécanique et des moyens d'entraînement en rotation du troisième élément est entrainé par la turbomachine.

Selon une autre caractéristique de ce procédé plus spécifiquement associé à une turbomachine dans laquelle les moyens de prélèvement mécanique sont étant agencés le réducteur et l'organe, ce procédé comporte en outre :
- une étape de freinage de l'organe au cours de laquelle au moins en rotation au cours de laquelle le moteur-générateur formant les moyens de prélèvement mécanique prélève de la puissance sur ledit organe, et/ou
- une étape de fourniture d'un pic de puissance au cours de laquelle le moteur-générateur formant les moyens de prélèvement mécanique apporte de la puissance audit organe à partir d'une source de puissance extérieure, et/ou
-- une étape de taxiage électrique au cours de laquelle, la turbomachine étant éteinte, le moteur-générateur formant les moyens de prélèvement mécanique apporte de la puissance audit organe à partir d'une source de puissance extérieure.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- les figures 1 et 2 sont des vues schématiques en coupe longitudinale de turbomachines à générateur de gaz monocorps, respectivement à turbine liée et à turbine libre,
- la figure 3 est une vue schématique en coupe longitudinale d'une turbomachine à réducteur,
- la figure 4 est une vue à plus grande échelle d'une partie de la figure 3,
- la figure 5 est une vue schématique en perspective d'un réducteur de turbomachine,
- la figure 6 est une vue correspondant à la figure 4 et illustre une caractéristique de l'invention,
- les figures 7 et 8 sont des vues très schématiques d'une turbomachine selon l'invention, et illustrent un premier mode de réalisation de l'invention, et
- les figures 9 et 10 sont des vues très schématiques d'une turbomachine selon l'invention, et illustrent une variante de réalisation de l'invention,

### DESCRIPTION DETAILLEE

Les figures 1 et 2 ont été brièvement commentées dans ce qui précède. Elles montrent une turbomachine d'aéronef monocorps comportant un unique corps tournant. Dans la figure 1, la turbomachine comprend une turbine liée au corps du générateur de gaz et, dans la figure 2, la turbomachine comprend une turbine libre montée en aval de la turbine du corps du générateur de gaz.

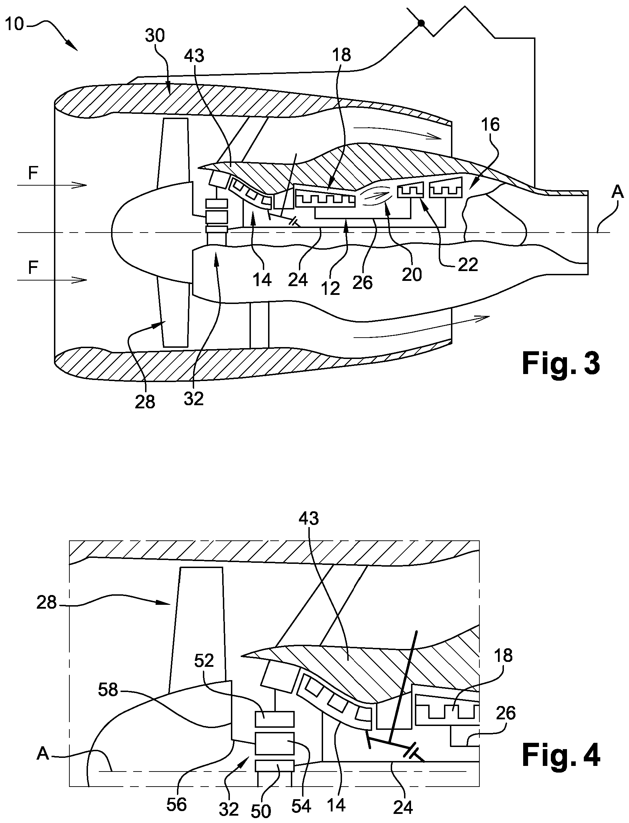

Les figures 3 et 4 représentent schématiquement une turbomachine 10 d'aéronef à double corps et double flux.

La turbomachine 10 comporte de façon classique un générateur de gaz 12 comprenant un compresseur basse pression 14, un compresseur haute pression 18, une chambre de combustion 20, une turbine haute pression 22 et une turbine basse pression 16. Par la suite, les termes « amont » et « aval » sont considérés selon une direction principale F d'écoulement des gaz dans la turbomachine, cette direction F étant parallèle à l'axe longitudinal A de la turbomachine.

Les rotors du compresseur basse pression 14 et de la turbine basse pression 16 forment un corps basse pression ou BP, et sont reliés l'un à l'autre par un arbre basse pression ou BP 24 centré sur l'axe A. De même, les rotors du compresseur haute pression 18 et de la turbine haute pression 22 forment un corps haute pression ou HP, et sont reliés l'un à l'autre par un arbre haute pression ou HP 26 centré sur l'axe A et agencé autour de l'arbre BP 24.

La turbomachine 10 comporte par ailleurs, à l'avant du générateur de gaz 12, une soufflante 28. Cette soufflante 28 est rotative selon l'axe A, et entourée d'un carter de soufflante 30. Elle est entraînée indirectement par l'arbre BP 24, au moyen d'un réducteur 32 agencé entre le corps BP et la soufflante 28, en étant disposé axialement entre cette dernière et le compresseur BP 14. La présence du réducteur 32 pour entraîner la soufflante 28 permet de prévoir un plus grand diamètre de soufflante, et favorise donc l'obtention d'un plus fort taux de dilution, assurant un gain de consommation en carburant.

Le réducteur 32 des figures 3 et 4 comprend un train épicycloïdal. Il est noté que, conventionnellement, le train est dit épicycloïdal lorsque la couronne du réducteur est fixe ou apte à être fixe en rotation.

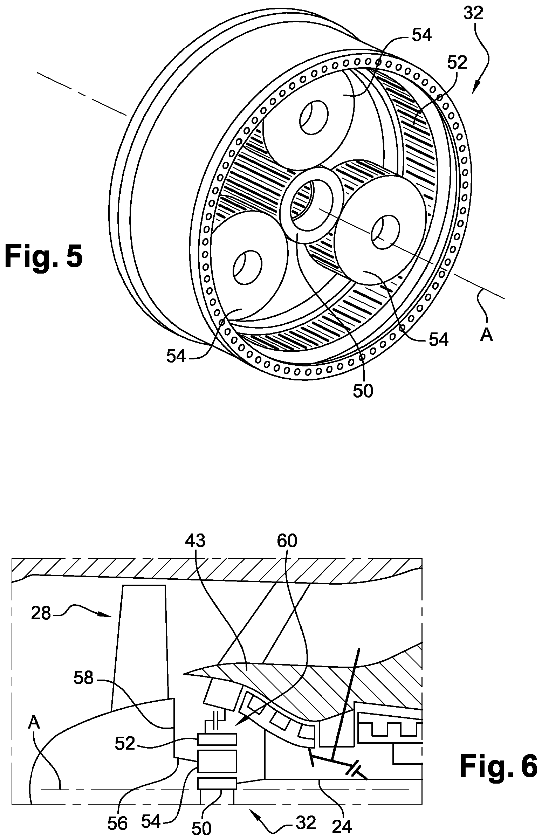

Comme cela est mieux visible en figure 5, un réducteur épicycloïdal 32 comprend un arbre planétaire 50 centré sur l'axe A et solidaire en rotation de l'arbre basse pression 24, en étant agencé dans le prolongement amont de cet arbre 24.

Le réducteur 32 comporte par ailleurs une couronne extérieure 52 et des satellites 54 engrenant avec la couronne extérieure 52 et l'arbre planétaire 50 et porté par un arbre porte-satellites 56.

Dans le réducteur épicycloïdal 32, la couronne 52 est reliée fixement à un carter de stator du compartiment inter-veine 43, et le porte-satellites 56 est solidaire en rotation d'un arbre de soufflante 58, ce dernier portant en général les aubes de soufflante par l'intermédiaire d'un disque de soufflante.

La figure 6 représente un caractéristique importante de l'invention selon laquelle la couronne 52 du réducteur 32 est reliée par des moyens de freinage 60 au carter de stator ici du compartiment inter-veine 43.

Dans la position freinée, l'organe 60 solidarise la couronne 52 avec le stator. Le réducteur 32 a alors un fonctionnement classique de train épicycloïdal avec un rapport de réduction donné. Dans la position pilotée, l'organe 60 désolidarise la couronne 52 du stator qui peut donc à ce moment être piloté par les moyens d'entrainement.

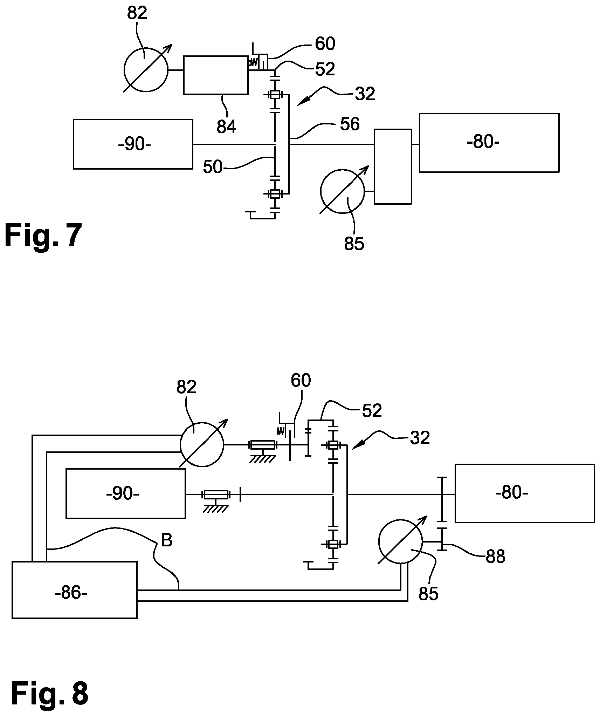

Dans les figures 7 et suivantes qui illustrent des variantes de réalisation de l'invention, les éléments décrits dans ce qui précède sont désignés par les mêmes chiffres de référence.

Les figures 7 et 8 illustrent une première variante de l'invention. Le principe consiste ici à piloter la vitesse de rotation de la couronne 52 du réducteur 32 afin de piloter la vitesse de sortie du réducteur 32 à savoir la vitesse de l'organe 80 entraîné par le réducteur, qui est une soufflante dans le cas précité mais qui pourrait être une hélice dans le cas d'un turbopropulseur ou un rotor dans le cas d'un turbomoteur d'hélicoptère ou un APU.

La turbomachine comprend des moyens 82 d'entraînement en rotation de la couronne 52 lorsqu'elle est désolidarisée du carter par l'intermédiaire des moyens de freinage 60. Dans les exemples représentés, les moyens d'entraînement sont reliés par des moyens 84 de liaison mécanique à la couronne et sont reliés à des moyens 85 de prélèvement mécanique de puissance sur le moteur. Comme illustré à la figure 8, la liaison entre les moyens de liaison mécanique et les moyens de prélèvement peut être réalisée au moyen d'un circuit 86 électrique, hydraulique ou électronique. Autrement dit, une partie de la puissance de la turbomachine est prélevée et dérivée par le circuit 86 pour entraîner en rotation la couronne.

Le choix de l'entraînement de la couronne permet de nécessiter un couple moindre pour son entraînement, et par conséquent, par rapport à une autre solution, de permettre l'utilisation de moyens 82 d'entrainement de dimension et masse réduites.

Dans le cas des figures 7 et 8, les moyens de prélèvement sont situés en aval (par référence à la direction de transmission mécanique) du réducteur 32, entre le réducteur et l'organe 80 à entraîner par ce dernier. Les moyens de prélèvement 85 peuvent être reliés mécaniquement par un pignon 88 ou analogue à l'arbre de sortie du réducteur, comme c'est le cas dans l'exemple représenté.

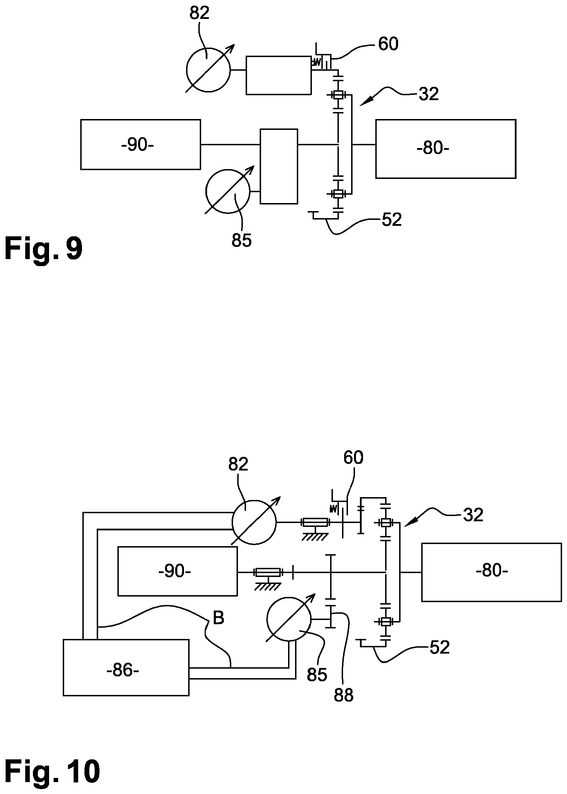

Dans le cas des figures 9 et 10, les moyens de prélèvement 85 sont situés en amont du réducteur 32, entre le réducteur et le générateur de gaz 90. Les moyens de prélèvement 85 peuvent être reliés mécaniquement par un pignon 88 ou analogue à l'arbre d'entrée du réducteur, comme c'est le cas dans l'exemple représenté.

Les moyens d'entraînement 82 peuvent comprendre au moins un moteur et les moyens de prélèvement 85 peuvent comprendre au moins un générateur. A noter que les accouplements des moteurs et générateurs peuvent varier en fonction des applications. Des moteurs/générateurs coaxiaux avec les arbres peuvent être intéressants (synchrones ou entrainés en rotation par un système de transmission dédié). Des entraînements plus classiques par engrenages sont également possibles.

Les moyens 82, 85 précités peuvent être hydrauliques ou électriques, et réversibles (entrainés ou moteurs).

Les solutions décrites ci-avant permettent de définir un fonctionnement de la turbomachine selon plusieurs étapes individuelles.

Ainsi, les solutions décrites ci-avant ont l'avantage de résoudre les deux inconvénients du système CVT toroïdal cités ci-avant, à savoir :
- elles permettent de débrayer l'arbre de rotor 24, en laissant la couronne libre de tourner. Ainsi, le recours à un embrayage supplémentaire n'est plus nécessaire (gains en masse et coût) notamment pour les applications turbomoteur,
- elles permettent de transmettre de forts couples via une transmission de puissance principalement mécanique ; le recours à un réducteur supplémentaire n'est plus nécessaire (à nouveau, gains en masse et coût).

Cependant, une source de puissance supplémentaire est nécessaire pour l'asservissement de la couronne, dans cet exemple matérialisé par les organes de la branche de dérivation B.

Pour des raisons de sécurité évidentes, un tel système pourrait disposer d'un système de sécurité en cas de défaillance des organes de la branche de dérivation B. En effet, une défaillance du système de régulation pourrait revenir à libérer la couronne, débrayant ainsi le moteur qui partirait en survitesse. Les moyens de freinage 60, fermés par défaut, pourraient idéalement remplir cette fonction.

Une loi de recueil pourrait être définie pour permettre la mise en place des moyens de freinage 60. Le turbomoteur se comportera alors comme un turbomoteur à turbine liée, le blocage de la couronne conduisant à convertir le réducteur 32 à couronne pilotée en train épicycloïdal classique.

On notera que si le système à circuit électrique 86 permet plusieurs possibilités. Le démarrage du turbomoteur peut être effectué dans le cas de systèmes de dérivation électriques en utilisant les moteurs électriques existants. Ainsi, le maintien d'un générateur/démarreur classique dédié n'est plus utile (gain de masse).

Par ailleurs, on notera que la seconde variante des figures 9 et 10 permet un démarrage du turbomoteur plus facile que la première variante des figures 7 et 8.

Dans le cadre de la première variante, il faudra de préférence gérer le démarrage en utilisant une loi qui reste à définir, en utilisant par exemple des moyens de prélèvement 85 et moyens d'entraînement 82 constitués de moteurs-générateurs pouvant alternativement fonctionner en moteur ou en générateur.

De la même manière et pour les deux variantes, les deux moteurs-générateurs du circuit de dérivation pourraient servir à
- assister le moteur principal dans ses transitoires,
- permettre des démarrages rapides en utilisant la puissance électrique disponible, et
- permettre des démarrages rapides en utilisant éventuellement l'inertie du rotor principal.

Une fois démarré, le moteur pourrait entraîner une des générateurs du réducteur 32 pour fournir de la puissance pour les besoins de l'aéronef (mode APU) tout en garantissant que le rotor de l'hélicoptère ou l'hélice de l'avion n'est pas entrainé en rotation. Ceci pourrait par exemple être réalisé :
- dans la première variante en bloquant la sortie réducteur 32 (ex : avec le générateur - moyens de prélèvement 85 - et moyens de freinage), et en prélevant la puissance sur la couronne avec le générateur 82.
- dans la seconde variante, en prélevant la puissance sur le générateur 85 et en laissant la couronne libre de tourner.

Ainsi, dans le cas de la première variante, le générateur 85 du réducteur 32 pourrait remplacer avantageusement le générateur BTP. En effet, le générateur 85 est entrainé à vitesse constante sur une application turbomoteur.

De même, dans le cas de la première variante, le générateur 85 du réducteur 32 pourrait permettre de freiner le rotor au sol après l'atterrissage par exemple. En fonction de la technologie de générateur 85 choisie, le générateur pourrait remplacer le frein de l'hélicoptère ou seulement l'assister. Dans tous les cas, le générateur permettrait par exemple de récupérer l'énergie du rotor pour recharger les batteries.

De même, dans le cas de la première variante, le générateur 85 du réducteur 32 pourrait permettre plus aisément de fournir un pic de puissance (certes limité à une centaine de kW) pour assister le pilote à l'autorotation par prélèvement électrique sur une source extérieure (ex : APU, batteries).

De même, dans le cas de la première variante, le générateur 85 du réducteur 32 pourrait permettre plus aisément de fournir de la puissance à l'hélice ou la soufflante d'un avion pour le taxiage électrique. Ainsi, on pourrait envisager une hélice entrainée en rotation par un système électrique, moteur éteint. La puissance devra alors provenir d'une puissance extérieure :
- batteries,
- APU, ou
- autre moteur allumé pour avion multi-moteurs.

La présente invention permettrait :
- dans le cas d'un réducteur 32 associé à une turbine liée :
   ∘ de supprimer l'arbre sur-critique traversant, réduire le diamètre des disques, supprimer le blindage,
   ∘ d'utiliser le générateur de gaz à des régimes et des puissances choisies librement, permettant des stratégies de pilotage variées et des gains en performances, tout en permettant une consigne de vitesse en sortie large
   ∘ de ne pas avoir recours à un embrayage pour démarrer le moteur,
- dans le cas d'un réducteur 32 associé à une turbine libre :
   ∘ d'utiliser la turbine libre dans des plages de fonctionnement optimisées tout en permettant une consigne de vitesse en sortie large,
- de remplir les fonctions de réducteur et de variation continue en même temps via le train épicycloïdal,
- reste compatible de solutions d'hybridation identifiées, sans surpoids majeurs, car les moteurs-générateurs sont déjà présents pour le réducteur 32:
   ∘ redémarrage, redémarrage rapide et assistance aux transitoires,
   ∘ communalisation de générateur avec la BTP (première variante),
   ∘ permettre un mode APU avec moteur allumé et rotor ou hélice arrêté,
   ∘ assistance (faible) à l'auto-rotation pour turbomachine et au taxiage électrique pour turbopropulseur, et
   ∘ frein de rotor principal avec moteur électrique sur l'arbre de sortie (première variante).

L'invention trouve particulièrement avantage à s'appliquer à une turbomachine d'aéronef monocorps, car celle-ci offre une grande réactivité aux régimes transitoires, le taux de compression du compresseur étant disponible immédiatement. En outre une telle turbomachine offre une architecture simplifiée.

## Revendications

1. Turbomachine (10) d'aéronef, comportant un unique corps tournant comprenant un rotor de compresseur et un rotor de turbine reliés entre eux par un arbre de rotor (24), la turbomachine étant configurée pour entraîner un organe (80) par ledit arbre par l'intermédiaire d'un réducteur épicycloïdal (32), ledit réducteur comportant au moins un premier élément (50) solidaire en rotation dudit arbre, au moins un second élément (56) configuré pour être solidaire en rotation dudit organe (80), et au moins un troisième élément (52) qui est configuré pour être sélectivement solidarisé à un stator de la turbomachine et désolidarisé de ce stator, ladite turbomachine comprenant des moyens (82, 84) d'entraînement en rotation dudit troisième élément qui sont configurés pour entraîner ledit troisième élément à une vitesse pilotée lorsqu'il est désolidarisé dudit stator, ladite vitesse du troisième élément étant pilotée de manière à maîtriser la vitesse dudit second élément selon un rapport de réduction adapté pour optimiser les performances de la turbomachine à plusieurs points de fonctionnement de la turbomachine, **caractérisée en ce que** ledit troisième élément est relié audit stator par des moyens de freinage (60) et **en ce que** lesdits moyens d'entraînement comprennent des moyens (84) de liaison mécanique audit troisième élément (82) et des moyens (85, 86) de prélèvement mécanique de puissance sur ladite turbomachine ou sur une source extérieure à la turbomachine, les moyens d'entraînement étant configurés pour que la puissance prélevée par les moyens de prélèvement soit transmise par les moyens de liaison audit troisième élément en vue de son entraînement en rotation.

2. Turbomachine (10) selon la revendication 1, dans laquelle ledit troisième élément est une couronne externe (52) du réducteur (32).

3. Turbomachine (10) selon l'une des revendications précédentes, dans laquelle lesdits moyens d'entraînement sont réversibles.

4. Turbomachine (10) selon la revendication précédente, dans laquelle lesdits moyens de prélèvement mécanique (85, 86) sont configurés pour prélever une puissance sur ledit corps tournant ou sur ledit organe (80).

5. Turbomachine (10) selon la revendication précédente, dans laquelle lesdits moyens de prélèvement mécanique (85, 86) sont reliés à un desdits éléments dudit réducteur (32).

6. Turbomachine (10) selon l'une des revendications 3 à 5, dans laquelle lesdits moyens de liaison mécanique (84) sont reliés auxdits moyens de prélèvement mécanique par un circuit électronique, électrique ou hydraulique (86).

7. Turbomachine (10) selon l'une des revendications précédentes, **caractérisée en ce qu'**elle est un turbomoteur d'hélicoptère, ledit organe étant un rotor de l'hélicoptère, ou un turbopropulseur ou turbomoteur d'avion, ledit organe étant une hélice ou une soufflante, ou un APU.

8. Procédé de commande d'une turbomachine (10) selon l'une des revendications précédentes, **caractérisé en ce qu'**il comporte au moins :
- une étape de débrayage de l'arbre de rotor (24) au cours de laquelle le troisième élément (52) est laissé libre de tourner; et/ou
- une étape de fonctionnement en réducteur lié, au cours de laquelle le troisième élément est bloqué par les moyens de freinage (60).

9. Procédé de commande d'une turbomachine (10) selon l'une des revendications 6 à 7, comportant des moyens de prélèvement mécanique (85) et des moyens (82) d'entraînement en rotation du troisième élément constitués de moteurs-générateurs reliés par un circuit électrique (86), **caractérisé en ce qu'**il comporte :
- une étape de démarrage au cours de laquelle la turbomachine (10) est démarrée par au moins un des moteurs générateurs formant les moyens de prélèvement mécanique (85) et des moyens (82) d'entraînement en rotation du troisième élément, et/ou
- une étape d'assistance de la turbomachine (10) dans ses régimes transitoires par au moins un des moteurs générateurs formant les moyens de prélèvement mécanique (85) et des moyens (82) d'entraînement en rotation du troisième élément, et/ou
- une étape de fourniture de puissance APU au cours de laquelle le second élément (56) n'est pas entrainé en rotation et/ou est bloqué et dans laquelle au moins un des moteurs-générateurs formant les moyens de prélèvement mécanique (85) et des moyens (82) d'entraînement en rotation du troisième élément est entrainé par la turbomachine.

10. Procédé de commande d'une turbomachine (10) selon la revendication précédente, comportant des moyens de prélèvement mécanique (85) et des moyens (82) d'entraînement en rotation du troisième élément constitués de moteurs-générateurs reliés par un circuit électrique (86), les moyens de prélèvement mécanique (85) étant agencés le réducteur et l'organe (80), **caractérisé en ce qu'**il comporte en outre :
- une étape de freinage de l'organe (80) au cours de laquelle au moins en rotation au cours de laquelle le moteur-générateur formant les moyens de prélèvement mécanique (85) prélève de la puissance sur ledit organe (80), et/ou
- une étape de fourniture d'un pic de puissance au cours de laquelle le moteur-générateur (80) formant les moyens de prélèvement mécanique (85) apporte de la puissance audit organe (80) à partir d'une source de puissance extérieure, et/ou
- une étape de taxiage électrique au cours de laquelle, la turbomachine (10) étant éteinte, le moteur-générateur formant les moyens de prélèvement mécanique (85) apporte de la puissance audit organe (80) à partir d'une source de puissance extérieure.

## Patentansprüche

1. Flugzeugturbomaschine (10), das einen einzigen Drehkörper umfasst, der einen Kompressorrotor und einen Turbinenrotor umfasst, die durch eine Rotorwelle (24) miteinander verbunden sind, wobei das Turbomaschine konfiguriert ist, um ein Organ (80) durch die Welle mithilfe eines epizyklischen Reduktors (32) anzutreiben, wobei der Reduktor mindestens ein erstes Element (50) umfasst, das drehfest mit der Welle verbunden ist, mindestens ein zweites Element (56), das konfiguriert ist, um drehfest mit dem Organ (80) verbunden zu sein, und mindestens ein drittes Element (52), das konfiguriert ist, um selektiv fest mit einem Stator des Turbomaschine verbunden und von diesem Stator getrennt zu werden, wobei das Turbomaschine Drehantriebsmittel (82, 84) des dritten Elements umfasst, die konfiguriert sind, um das dritte Element mit einer gesteuerten Geschwindigkeit anzutreiben, wenn es von diesem Stator getrennt ist, wobei die Geschwindigkeit des dritten Elements derart gesteuert wird, um die Geschwindigkeit des zweiten Elements entsprechend einem Untersetzungsverhältnis zu beherrschen, das angepasst ist, um die Leistungen des Turbomaschine an mehreren Betriebspunkten des Turbomaschine zu optimieren, **dadurch gekennzeichnet, dass** das dritte Element durch Bremsmittel (60) mit dem Stator verbunden ist, und dadurch, dass die Antriebsmittel mechanischen Verbindungsmittel (84) mit dem dritten Element (82) und mechanische Leistungsentnahmemittel (85, 86) auf dem Turbomaschine oder auf einer Quelle außerhalb des Turbomaschine umfassen, wobei die Antriebsmittel konfiguriert sind, damit die durch die Entnahmemittel entnommene Leistung durch Verbindungsmittel zu dem dritten Element, in Hinblick auf dessen Drehantrieb, übertragen wird.

2. Turbomaschine (10) nach Anspruch 1, wobei das dritte Element ein äußerer Kranz (52) des Reduktors (32) ist.

3. Turbomaschine (10) nach einem der vorstehenden Ansprüche, wobei die Antriebsmittel umkehrbar sind.

4. Turbomaschine (10) nach dem vorstehenden Anspruch, wobei die mechanischen Entnahmemittel (85, 86) konfiguriert sind, um eine Leistung auf dem Drehkörper oder auf dem Organ (80) zu entnehmen.

5. Turbomaschine (10) nach dem vorstehenden Anspruch, wobei die mechanischen Entnahmemittel (85, 86) mit einem der Elemente des Reduktors (32) verbunden sind.

6. Turbomaschine (10) nach einem der Ansprüche 3 bis 5, wobei die mechanischen Verbindungsmittel (84) durch eine elektronische, elektrische oder hydraulische Schaltung (86) mit den mechanischen Entnahmemitteln verbunden sind.

7. Turbomaschine (10) nach einem der vorstehenden Ansprüche, **dadurch gekennzeichnet, dass** es ein Helikopter-Turbotriebwerk ist, wobei das Organ ein Rotor des Helikopters, oder ein Turboprop oder Turbomotor eines Flugzeugs ist, wobei das Organ ein Propeller oder ein Gebläse, oder eine APU ist.

8. Verfahren zur Steuerung eines Turbomaschine (10) nach einem der vorstehenden Ansprüche, **dadurch gekennzeichnet, dass** es mindestens Folgendes umfasst:
- einen Schritt zum Auskuppeln der Rotorwelle (24), im Laufe dessen das dritte Element (52) zum Drehen freigelassen wird; und/ oder
- einen Betriebsschritt mit verbundenem Reduktor, im Laufe dessen das dritte Element durch die Bremsmittel (60) blockiert wird.

9. Verfahren zur Steuerung eines Turbomaschine (10) nach einem der Ansprüche 6 bis 7, mechanische Entnahmemittel (85) und Drehantriebsmittel (82) des dritten Elements umfassend, die aus Motor-Generatoren erstellt sind, die durch eine elektrische Schaltung (86) verbunden sind, **dadurch gekennzeichnet, dass** es Folgendes umfasst:
- einen Startschritt, im Laufe dessen das Turbomaschine (10) durch mindestens einen der Motor-Generatoren gestartet wird, der die mechanischen Entnahmemittel (85) und Drehantriebsmittel (82) des dritten Elements bildet, und/ oder
- einen Schritt zum Unterstützen des Turbomaschine (10) in dessen Übergangsdrehzahlen durch mindestens einen der Motor-Generatoren, der die mechanischen Entnahmemittel (85) und Drehantriebsmittel (82) des dritten Elements bildet, und/ oder
- einen Schritt zum Bereitstellen von APU-Leistung im Laufe dessen das zweite Element (56) nicht in Drehung angetrieben wird und/ oder blockiert wird und bei dem mindestens einer der Motor-Generatoren, der die mechanischen Entnahmemittel (85) und Drehantriebsmittel (82) des dritten Elements bildet, durch das Turbomaschine angetrieben wird.

10. Verfahren zur Steuerung eines Turbomaschine (10) nach dem vorstehenden Anspruch, mechanische Entnahmemittel (85) und Drehantriebsmittel (82) des dritten Elements umfassend, die aus Motor-Generatoren erstellt sind, die durch eine elektrische Schaltung (86) verbunden sind, wobei die mechanischen Entnahmemittel (85) dem Reduktor und dem Organ (80) angeordnet sind, **dadurch gekennzeichnet, dass** es weiter Folgendes umfasst:
- einen Schritt zum Bremsen des Organs (80) im Laufe dessen, mindestens in Drehung, im Laufe derer der Motor-Generator, der die mechanischen Entnahmemittel (85) bildet, Leistung in dem Organ (80) entnimmt, und/ oder
- einen Schritt zum Bereitstellen einer Leistungsspitze, im Laufe dessen der Motor-Generator (80), der die mechanischen Entnahmemittel (85) bildet, dem Organ (80) Leistung aus einer externen Leistungsquelle zuführt, und/oder
- einen Schritt zum elektrischen Rollen, im Laufe dessen, da das Turbomaschine (10) ausgeschaltet ist, der Motor-Generator, der die mechanischen Entnahmemittel (85) bildet, dem Organ (80) Leistung aus einer externen Leistungsquelle zuführt.

## Claims

1. Turbine engine (10), comprising one single rotating body comprising a compressor rotor and a turbine rotor interconnected by a rotor shaft (24), the turbine engine being configured to drive a member (80) by said shaft via an epicyclic reduction gear (32), said reduction gear comprising at least one first element (50) rotationally secured to said shaft, at least one second element (56) configured to be rotationally secured to said member (80), and at least one third element (52) configured to be selectively secured to a stator of the turbine engine and disconnected from said stator, said turbine engine comprising the means (82, 84) to rotationally drive said third member configured to drive said third element at a piloted speed when it is disconnected from said stator, **characterised in that** said third element is connected to said stator by braking means (60), and **in that** said driving means comprise mechanical connection means (84) to said third element (82), and mechanical retrieval means (85, 86) of the power from said turbine engine or from a source external to the turbine engine, the driving means being configured so that the power retrieved by the retrieval means is transmitted by the connection means to said third element, for the purpose of rotationally driving said third element.

2. Turbine engine (10) according to claim 1, wherein said third element is an outer ring gear (52) of the reduction gear (32).

3. Turbine engine (10) according to one of the preceding claims, wherein said driving means are reversible.

4. Turbine engine (10) according to the preceding claim, wherein said mechanical retrieval means (85, 86) are configured to retrieve power from said rotating body or from said member (80).

5. Turbine engine (10) according to the preceding claim, wherein said mechanical retrieval means (85, 86) are connected to said elements of said reduction gear (32).

6. Turbine engine (10) according to one of claims 3 to 5, wherein said mechanical connection means (84) are connected to said mechanical retrieval means by an electronic, electric or hydraulic circuit (86).

7. Turbine engine (10) according to one of the preceding claims, **characterised in that** it is a turbine engine of a helicopter, said member being a helicopter rotor, or a turboprop or turbine engine of an airplane, said member being a propeller or a fan, or an APU.

8. Method for controlling a turbine engine (10) according to one of the preceding claims, **characterised in that** it comprises at least:
- a step whereby the rotor shaft (24) is disengaged and during which the third element (52) is left free to rotate; and/or
- an operating step in linked reduction gear mode, during which the third element is blocked by the braking means (60).

9. Method for controlling a turbine engine (10) according to one of the claims 6 to 7, comprising mechanical retrieval means (85) and means (82) to rotationally drive the third element consisting of motor-generators interconnected by an electric circuit (86), **characterised in that** it comprises:
- a starting step during which the turbine engine (10) is started by at least one of the motor-generators forming the mechanical retrieval means (85) and the means (82) to rotationally drive the third element, and/or
- a turbine engine (10) assistance step in the transient speeds thereof by at least one of the motor-generators thereof forming the mechanical retrieval means (85) and the means (82) to rotationally drive the third element, and/or
- a step whereby APU power is provided, during which the second element (56) is not rotationally driven and/or is blocked, and wherein at least one of the motor-generators thereof forming the mechanical retrieval means (85) and the means (82) to rotationally drive the third element is driven by the turbine engine.

10. Method for controlling a turbine engine (10) according to the preceding claim, comprising mechanical retrieval means (85) and means (82) to rotationally drive the third element, consisting of motor-generators interconnected by an electric circuit (86), the mechanical retrieval means (85) being arranged between the reduction gear and the member (80) **characterised in that** it further comprises:
- a braking step of the member (80) during which at least the motor-generator forming the mechanical retrieval means (85) retrieves the power from said member (80), and/or
- a step whereby a power peak is provided, during which the motor-generator (80) forming the mechanical retrieval means (85) provides power to said member (80) from an external power source, and/or
- an electric taxiing step during which the turbine engine (10) is turned off, the motor-generator forming the mechanical retrieval means (85) provides power to said member (80) from an external power source.
